# EUROPÄISCHE PATENTSCHRIFT

(11) **EP 2 326 539 B1**
(45) Veröffentlichungstag und Bekanntmachung des Hinweises auf die Patenterteilung: **04.01.2012**
(21) Anmeldenummer: 09779847.4
(22) Anmeldetag: 19.06.2009
(51) Int. Cl.: B60T 7/04, B60T 7/06, B60T 8/32, B60T 13/70, B60T 17/22

(54) **VERBINDUNGSELEMENT ZUR MESSUNG EINER BETÄTIGUNGSKRAFT EINER FAHRZEUGBREMSANLAGE**
CONNECTING ELEMENT FOR MEASURING AN ACTUATING FORCE OF A VEHICLE BRAKE SYSTEM
ELEMENT DE LIAISON POUR MESURER UNE FORCE D'ACTIONNEMENT D'UN SYSTEME DE FREINAGE DE VEHICULE

(30) Priorität: 19.08.2008 DE 102008041349
(43) Veröffentlichungstag der Anmeldung: 01.06.2011
(73) Patentinhaber: Robert Bosch GmbH, 70442 Stuttgart (DE)
(72) Erfinder: VOLLERT, Herbert, 71665 Vaihingen/Enz (DE); VERHAGEN, Armin, 71701 Schwieberdingen (DE); MAYER, Jochen, 70195 Stuttgart-Botnang (DE)
(86) Internationale Anmeldenummer: PCT/EP2009/057657
(87) Internationale Veröffentlichungsnummer: WO 2010/020449

(56) Entgegenhaltungen:
- EP-A- 0 708 006
- EP-A- 0 768 224
- EP-A- 0 771 705
- DE-A1- 4 324 041
- DE-C1- 19 838 568
- FR-A- 2 838 695
- US-A- 4 535 171
- US-A1- 2002 117 893
- US-B1- 6 367 886

## Beschreibung

### Stand der Technik

Die Erfindung betrifft ein Verbindungselement zur Messung einer Betätigungskraft einer Fahrzeugbremsanlage mit den Merkmalen des Oberbegriffs des Anspruchs 1.

Hydraulische Fahrzeugbremsanlagen weisen ein Verbindungselement, das üblicherweise als Pedalstange oder als Kolbenstange bezeichnet wird, auf, das ein Bedienelement der Fahrzeugbremsanlage mit einem Eingangselement der Fahrzeugbremsanlage verbindet. Das Bedienelement ist dasjenige Element oder Bauteil, an dem eine Betätigungskraft in die Fahrzeugbremsanlage eingeleitet wird. Bei herkömmlichen Fahrzeugbremsanlagen ist es ein (Fuß-)Bremspedal oder insbesondere bei Krafträdern ein (Hand-)Bremshebel. Das Eingangselement herkömmlicher hydraulischer Fahrzeugbremsanlagen ist der sog. Primär- oder Stangenkolben des Hauptbremszylinders, der durch das Verbindungselement, nämlich die Pedal- oder Kolbenstange mit dem Bremspedal oder Bremshebel verbunden ist. Das Verbindungselement überträgt die Betätigungskraft, also die auf das Bremspedal oder den Bremshebel ausgeübte Muskelkraft, auf das Eingangselement, also beispielsweise den Primär- oder Stangenkolben des Hauptbremszylinders. Die Erfindung ist allerdings nicht auf die sog. Pedal- oder Kolbenstange als Verbindungselement beschränkt, sondern allgemein auf ein Verbindungselement gerichtet, das die auf die Fahrzeugbremsanlage ausgeübte Betätigungskraft überträgt.

Die Messung der Betätigungskraft einer Fahrzeugbremsanlage ist in vielen Veröffentlichungen angesprochen, wobei üblicherweise von einem Kraftsensor oder dgl. die Rede ist, ohne dass dessen Aufbau und Wirkungsweise erläutert wird. Beispielsweise offenbart die Offenlegungsschrift DE 103 27 553 A1, die einen elektromechanischen Bremskraftverstärker zum Gegenstand hat, einen Kraftsensor, der in einer Kolbenstange angeordnet ist.

Vergleichbar die Offenlegungsschrift DE 199 36 433 A1, deren Gegenstand ein elektromagnetischer Bremskraftverstärker ist und die einen Kraft-Spannungswandler aufweist, der zwischen einer Pedalstange und einer Kolbenstange, welche in Verlängerung der Pedalstange angeordnet ist, aufweist.

Gegenstand der Offenlegungsschrift DE 103 18 850 A1 ist eine Fahrzeugbremsanlage mit hydraulischer Bremskraftverstärkung. Sie weist einen Hauptbremszylinder auf, dessen Primär- oder Stangenkolben auf seiner einem Bremspedal zugewandten Rückseite von einer Fremdenergiequelle hydraulisch druckbeaufschlagbar ist. Der Hauptbremszylinder weist einen Pedalwegsimulator auf, der eine Simulatorfeder umfasst. Der Pedalwegsimulator simuliert möglichst wirklichkeitsnah eine Pedalkraft-/Wegcharakteristik, wie sie herkömmliche hydraulische Fahrzeugbremsanlagen mit oder ohne Bremskraftverstärkung aufweisen, damit ein Fahrzeugführer das gewohnte Pedalgefühl hat. Der Hauptbremszylinder der bekannten Fahrzeugbremsanlage weist also keine starre Kolbenstange auf, sondern eine sich auf Grund der Simulatorfeder bei Kraftbeaufschlagung federelastisch verkürzende Pedal- oder Kolbenstange. Eine Messung der Betätigungskraft ist nicht offenbart, es wird statt dessen ein Weg der Pedal- oder Kolbenstange, letzten Endes also ein Pedalweg, gemessen.

Die Offenlegungsschrift DE 100 57 557 A1 offenbart einen elektromechanischen Bremskraftverstärker, bei dem ein Kraftsensor zwischen einer Pedalstange und einer in Verlängerung der Pedalstange angeordneten Kolbenstange angeordnet ist. Des Weiteren ist eine Reaktionsscheibe zwischen der Pedalstange und der Kolbenstange zum Zwecke einer komfortablen Betätigung angeordnet. Durch ihre Anordnung ist die Reaktionsscheibe in Reihe zum Kraftsensor angeordnet.

Die Patentanmeldung EP 0 768 224 A1 offenbart eine Pedalstange 4 als Verbindungselement, die in einem koaxialen Rohr eines Kolbens eines Hauptbremszylinders verschieblich ist und nach einem Lehrweg am Grund des Rohrs anstößt, so dass sie eine von einem Bremspedal eingeleitete Kraft unmittelbar auf den Kolben überträgt. Bevor die Pedalkraft von der Pedalstange auf den Kolben des Hauptbremszylinders übertragen wird, überträgt eine Schraubendruckfeder die Pedalkraft auf den Kolben des Hauptbremszylinders. Die Schraubendruckfeder kann eine progressive Federkennlinie aufweisen. Für eine Fremdenergiebremsung wird ein Pedalweg gemessen.

### Offenbarung der Erfindung

Das erfindungsgemäße Verbindungselement zur Messung einer Betätigungskraft einer Fahrzeugbremsanlage mit den Merkmalen des Anspruchs 1 weist eine Federelastizität mit einer progressiven Federkennlinie sowie eine Verformungsmesseinrichtung zur Messung einer Verformung des Verbindungselements durch eine auf das Verbindungselement ausgeübte Betätigungskraft auf. Das Verbindungselement weist in Reihe geschaltete Federelemente mit verschiedenen Federraten auf, die nach einem Federweg parallel wirken. Wird eine Betätigungskraft auf das erfindungsgemäße Verbindungselement ausgeübt, verformt es sich federelastisch, insbesondere verkürzt es sich. Mit der Verformungsmesseinrichtung wird die Verformung, beispielsweise die Verkürzung des Verbindungselements gemessen. Sie ist ein Maß für die Betätigungskraft, wobei auf Grund der progressiven Federkennlinie des Verbindungselements keine lineare Abhängigkeit zwischen der Verformung des Verbindungselements und der auf das Verbindungselement einwirkenden Betätigungskraft besteht.

Progressive Federkennlinie bedeutet, dass eine Federrate des Verbindungselements mit zunehmender Verformung des Verbindungselements größer wird. Die Federrate wird auch Federsteifigkeit genannt, bei konstanter Federrate (die hier nicht gegeben ist!), ist auch die Bezeichnung Federkonstante gebräuchlich. Bei kleiner Betätigungskraft ist die Federrate also kleiner als bei einer großen Betätigungskraft. Die Federkennlinie des erfindungsgemäßen Verbindungselements kann stetig oder auch nicht stetig sein. In letzterem Fall kann sich die Federkennlinie aus linearen Bereichen mit von Bereich zu Bereich steiler werdender Federkennlinie zusammensetzen, die an Knickstellen ineinander übergehen. Auch ist ein stufenweiser Anstieg der Federkennlinie denkbar. Bei nicht stetigem Verlauf weist die Federkennlinie mindestens zwei Bereiche mit unterschiedlichen Federraten auf. Eine konstante Federrate bedeutet eine gerade Federkennlinie mit konstanter Steigung, die Steigung der Federkennlinie ist die Federrate, nämlich die Kraftänderung im Verhältnis zur Verformung bzw. dem Federweg.

Auf Grund der progressiven Federkennlinie weist das erfindungsgemäße federelastische Verbindungselement bei kleiner Betätigungskraft eine verhältnismäßig große Verformung bei einer Kraftänderung auf. Die Auflösung des Messsignals, also eine Signalgüte der Verformungsmessung ist dadurch erhöht. Das ist für eine Bremskraftregelung ein Vorteil, weil zum einen bei kleiner Betätigungskraft eine Kraftänderung normalerweise ebenfalls klein ist und weil Bremsungen im Straßenverkehr zum größten Teil mit kleiner bis mittlerer Betätigungskraft erfolgen.

Bei einer hohen Betätigungskraft ist das erfindungsgemäße Verbindungselement auf Grund seiner progressiven Federkennlinie steifer, die Verformung bei einer Kraftänderung wird kleiner. Dadurch wird ein Betätigungsweg, um den ein Bremspedal oder ein Bremshebel weiter bewegt werden muss, bei hoher Betätigungskraft kürzer.

Auf Grund der bei geringer Betätigungskraft niedrigen Federrate des erfindungsgemäßen Verbindungselements werden Rückwirkungen auf ein Bremspedal oder einen Bremshebel aufgrund von Trägheiten eines Bremskraftverstärkers vermindert.

Die Unteransprüche haben vorteilhafte Ausgestaltungen und Weiterbildungen der im Anspruch 1 angegebenen Erfindung zum Gegenstand. Weitere Merkmale der Erfindung ergeben sich aus der folgenden Beschreibung einer Ausführungsform in Verbindung mit den Ansprüchen und der Zeichnung.

### Kurze Beschreibung der Zeichnung

Die Erfindung wird nachfolgend anhand einer in der Zeichnung dargestellten Ausführungsform erläutert. Es zeigen:
- Figur 1: eine Schemadarstellung eines erfindungsgemäßen Verbindungselements; und
- Figur 2: eine Federkennlinie des Verbindungselements aus Figur 1.

Die Figuren sind als vereinfachte und schematisierte Darstellungen zur Erläuterung und zum Verständnis der Erfindung zu verstehen.

### Ausführungsform der Erfindung

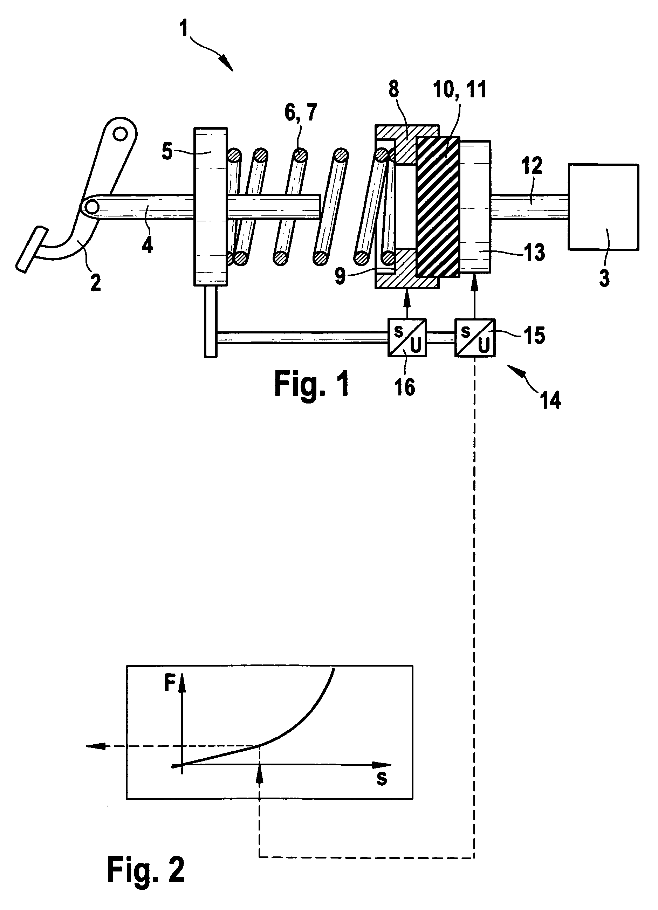

Das in Figur 1 dargestellte erfindungsgemäße Verbindungselement 1 verbindet ein Bremspedal 2 oder ein sonstiges Bedienelement mit einem Eingang eines Bremskraftverstärkers 3 oder einem sonstigen Eingangselement einer im Übrigen nicht dargestellten Fahrzeugbremsanlage. Das Eingangselement kann beispielsweise auch der Primär- oder Stangenkolben eines Hauptbremszylinders sein, der hier nicht dargestellt ist. Das Verbindungselement 1 weist eine Pedalstange 4 auf, die gelenkig mit dem Bremspedal 2 verbunden ist. Die Pedalstange 4 weist einen Teller 5 ungefähr in ihrer Längsmitte auf, der starr, beispielsweise einstückig, mit der Pedalstange 4 ist. Das Verbindungselement 1 überträgt eine Betätigungskraft vom Bremspedal 2 auf den Bremskraftverstärker 3.

Koaxial zur Pedalstange 4 ist ein erstes Federelement 6 angeordnet, das sich am Teller 5 abstützt. In der dargestellten und beschriebenen Ausführungsform der Erfindung ist das erste Federelement 6 als Schraubendruckfeder 7 ausgebildet, deren eine Endwindung auf dem Teller 5 der Pedalstange 4 aufsitzt.

Eine andere Endwindung der Schraubendruckfeder 7 sitzt auf einer Lochscheibe 8 auf, die allgemein auch als Zwischenstück bezeichnet werden kann. Die Lochscheibe 8 weist auf beiden Stirnseiten zylindrische Ansenkungen 9 auf, die Schraubendruckfeder 7 sitzt auf dem Grund der ihr zugewandten Ansenkung 9 der Lochscheibe 8 auf. Die Lochscheibe 8 ist ebenfalls koaxial zu der das erste Federelement 6 bildenden Schraubendruckfeder 7 und zur Pedalstange 4 angeordnet.

In der der Schraubendruckfeder 7 abgewandten Ansenkung der Lochscheibe 8 ist eine Reaktionsscheibe 10 angeordnet. Die Reaktionsscheibe 10 ist ein gummielastisches zweites Federelement 11, sie weist eine höhere Federrate als die das erste Federelement 6 bildende Schraubendruckfeder 7 auf, d. h. die Reaktionsscheibe 10 ist härter als die Schraubendruckfeder 7. Sie steht aus der Ansenkung der Lochscheibe 8 vor. Vorzugsweise ist die Reaktionsscheibe 10, die das zweite Federelement 11 bildet, erheblich härter, weist also eine wesentlich größere Federrate auf als die Schraubendruckfeder 7, die das erste Federelement 6 bildet. Die Reaktionsscheibe 10, die aus Gummi oder einem elastischen Kunststoff besteht, hat keine konstante, sondern eine mit steigender Belastung und Verformung steigende Federrate. Die Federrate der Reaktionsscheibe 10 kann linear, progressiv oder auch degressiv steigen, ihre Federkennlinie, also die Ableitung der Kraft nach der Verformung, ist eine steigende Kurve. Die Verformung der Reaktionsscheibe 10 kann auch als deren Federweg aufgefasst werden. Auch die Reaktionsscheibe 10 ist koaxial zur Lochscheibe 8, zur Schraubendruckfeder 7 und zur Pedalstange 4 angeordnet.

Auf einer der Pedalstange 4 und der Schraubendruckfeder 7 abgewandten Stirnseite der Reaktionsscheibe 10 ist eine Kolbenstange 12 angeordnet, die einen mit ihr starren, beispielsweise mit ihr einstückigen Teller 13 an ihrem der Reaktionsscheibe 10 zugewandten Ende aufweist, mit dem die Kolbenstange 12 auf der Reaktionsscheibe 10 aufsitzt. Die Kolbenstange 12 ist mit dem Eingang des Bremskraftverstärkers 3 verbunden. Auch die Kolbenstange 12 ist koaxial zu den Teilen des Verbindungselements 1, also zur Reaktionsscheibe 10, der Lochscheibe 8, der Schraubendruckfeder 7 und der Pedalstange 4 angeordnet.

Das Verbindungselement 1 weist eine Verformungsmesseinrichtung 14 auf, die einen Wegsensor 15 umfasst, der mit dem Teller 5 der Pedalstange 4 verbunden ist und den Abstand des Tellers 5 der Pedalstange 4 vom Teller 13 der Kolbenstange 12 misst. Mit der Verformungsmesseinrichtung 14 ist somit eine Verformung, d. h. eine Längenänderung des Verbindungselements 1 messbar. Die Messung erfolgt an zwei weit voneinander beabstandeten Stellen, nämlich an den Tellern 5, 13 der Pedalstange 4 und der Kolbenstange 12. Die Messung erfolgt also nahe der Enden des Verbindungselements 1 und über deren gesamte Federelastizität hinweg, die die beiden Federelemente 6, 11, nämlich die Schraubendruckfeder 7 und die Reaktionsscheibe 10, bewirken. Auf Grund der großen Messlänge über die gesamte Federelastizität hinweg wird eine große Verformung, d. h. Längenänderung gemessen, die Verformungsmesseinrichtung 14 weist dadurch eine hohe Auflösung und Signalgüte auf. Die Pedalstange 4 und die Kolbenstange 12 können als starr gegenüber den Federelemente 6, 11 angesehen werden, so dass eine Abstandsmessung an noch weiter beabstandeten Stellen des Verbindungselements 1 die Auflösung und Signalgüte der Messung nicht erhöht. Alternativ kann die Verformungsmessung auch nur über das weichere, erste Federelement 6 hinweg ohne die erheblich steifere Reaktionsscheibe 10 mit einem Wegsensor 16 erfolgen. Die Signalgüte verschlechtert sich dadurch nur vernachlässigbar gering, weil der größere Teil der Verformung am weicheren Federelement 6 erfolgt.

Bei einer Bremsbetätigung durch Niedertreten des Bremspedals 2 wird eine auf das Bremspedal 2 ausgeübte Muskelkraft als Betätigungskraft vom Bremspedal 2 über das Verbindungselement 1 auf den Bremskraftverstärker 3 übertragen. Dabei verkürzt sich das Verbindungselement 1 auf Grund seiner Federelastizität durch die beiden Federelemente 6, 11. Bei einer niedrigen Betätigungskraft kann die Reaktionsscheibe 10, die das zweite Federelement 11 bildet, auf Grund ihrer hohen Federrate als nahezu starr angesehen werden, es verformt sich deswegen bei niedriger Betätigungskraft im Wesentlichen nur die Schraubendruckfeder 7, die das erste Federelement 6 bildet. Eine Federkennlinie des Verbindungselements 1, die in Figur 2 dargestellt ist, ist deswegen bei niedriger Betätigungskraft näherungsweise eine Gerade; bei niedriger Betätigungskraft ist eine Gesamtfederrate des Verbindungselements 1 näherungsweise konstant.

Wird die Betätigungskraft größer, beginnt sich auch die Reaktionsscheibe 10 elastisch zu verformen. Da die Reaktionsscheibe 10 und die Schraubendruckfeder 7, die die Federelemente 6, 11 des Verbindungselements 1 bilden, in Serie geschaltet sind, vergrößert sich die Gesamtfederrate des Verbindungselements 1, wenn die Reaktionsscheibe 10 bei steigender Betätigungskraft verformt wird; das Verbindungselement 1 hat auf Grund der unterschiedlichen Federraten seiner Federelemente 6, 11 und deren Serienschaltung eine progressive Federkennlinie. Weist die Reaktionsscheibe 10 selbst eine progressive Federkennlinie auf, erhöht sich die Progression der Gesamtfederkennlinie des Verbindungselements 1.

Wird die Betätigungskraft, die über das Bremspedal 2 auf das Verbindungselement 1 ausgeübt wird, weiter erhöht, stößt die Pedalstange 4, die über den Teller 5, an dem sich die Schraubendruckfeder 7 abstützt, in Richtung der Reaktionsscheibe vorsteht, gegen die Reaktionsscheibe 10. Ab dieser Höhe der Betätigungskraft wird die Schraubendruckfeder 7, die das erste Federelement 6 des Verbindungselements 1 bildet, vom Teller 5 der Pedalstange 4 und zugleich die Reaktionsscheibe 10, die das zweite Federelement 11 des Verbindungselements 1 bildet, von der Pedalstange 4 beaufschlagt. Die Reaktionsscheibe 10 wird von der Pedalstange 4 direkt (und nicht nur indirekt über die Schraubendruckfeder 7) beaufschlagt, die beiden Federelemente 7, 11 werden somit parallel beaufschlagt, sie wirken parallel (und seriell). Durch diese Parallelschaltung der beiden Federelemente 6, 11 ab einer bestimmten Höhe der Betätigungskraft erhöht sich die Gesamtfederrate des Verbindungselements 1 weiter. Die Progression der Gesamtfederkennlinie des Verbindungselements 1, die in Figur 2 gezeigt ist, steigt weiter. Die Federrate der Reaktionsscheibe 10 ändert sich, wenn sie von der Pedalstange 4 auf einer kreisförmigen Fläche in ihrer Mitte oder von der Lochscheibe 8 auf einer Kreisringfläche an ihrem Rand beaufschlagt wird, die Federrate der Reaktionsscheibe 10 ist deswegen bei einer hohen Betätigungskraft eine andere als bei einer kleinen bis mittleren Betätigungskraft, wenn die Pedalstange 4 noch nicht an der Reaktionsscheibe 10 aufsitzt.

Aus der Messung des Abstands der beiden Teller 5, 13 der Pedalstange 4 und der Kolbenstange 12, also aus der Messung der Längenänderung des Verbindungselements 1, lässt sich aus der Gesamtfederkennlinie des Verbindungselements 1, die in Figur 2 dargestellt ist, die Betätigungskraft ermitteln, wie es die vom Wegsensor 15 zu Figur 2 führende Strichlinie andeutet. Für eine Bremskraftregelung ist die Kenntnis der Gesamtfederkennlinie allerdings nicht in jedem Fall erforderlich, eine Regelung oder eine Steuerung kann auch mit der Längenänderung des Verbindungselements 1 als Eingangsgröße erfolgen. Die Eingangsgröße wird in der Regelungs- und Steuerungstechnik auch als Führungsgröße oder als Sollwert bezeichnet. Alternativ kann wie gesagt die Messung des Abstands des Tellers 5 der Pedalstange 4 von der auch als Zwischenstück zu bezeichnenden Lochscheibe 8 mit dem Wegsensor 16 erfolgen. Die eine Messung schliesst die redundante andere Messung nicht aus.

## Patentansprüche

1. Verbindungselement (1) zur Messung einer Betätigungskraft einer Fahrzeugbremsanlage, das ein Bedienelement (2) der Fahrzeugbremsanlage mit einem Eingangselement der Fahrzeugbremsanlage verbindet, eine Betätigungskraft von dem Bedienelement (2) auf das Eingangselement überträgt, eine Federelastizität mit einer progressiven Federkennlinie aufweist, in Reihe geschaltete Federelemente (6, 11) mit verschiedenen Federraten aufweist, die nach einem Federweg der in Reihe geschalteten Federelemente (6, 11) parallel wirken **dadurch gekennzeichnet dass** es eine Verformungsmesseinrichtung (14, 15, 16) aufweist, mit der eine Verformung des Verbindungselements (1) durch die Betätigungskraft messbar ist.

2. Verbindungselement nach Anspruch 1, **dadurch gekennzeichnet,**
**dass** das Verbindungselement (1) mindestens ein Federelement (11) mit einer nicht konstanten Federrate aufweist.

3. Verbindungselement nach Anspruch 1, **dadurch gekennzeichnet,**
**dass** die Verformungsmesseinrichtung (14, 15, 16) eine Abstandsänderung voneinander beabstandeter Stellen des Verbindungselements (1) misst.

4. Verbindungselement nach Anspruch 3, **dadurch gekennzeichnet,**
**dass** die Verformungsmesseinrichtung (14, 15) eine Abstandsänderung an oder nahe an Enden des Verbindungselements (1) misst.

5. Verbindungselement nach Anspruch 3, **dadurch gekennzeichnet,**
**dass** das Verbindungselement (1) in Reihe geschaltete Federelemente (6, 11) mit verschiedenen Federraten aufweist und dass die Verformungsmesseinrichtung (14, 16) eine Längenänderung des Federelements (6) mit der kleineren Federrate misst.

## Claims

1. Connecting element (1) for measuring an actuating force of a vehicle brake system, which connects an operator control element (2) of the vehicle brake system to an input element of the vehicle brake system, transmits an actuating force from the operator control element (2) to the input element, and has a spring elasticity with a progressive spring characteristic curve and spring elements (6, 11) which are connected in series and have various spring rates which act in parallel according to spring travel of the spring elements (6, 11) which are connected in series, **characterized in that** said connecting element (1) has a deformation-measuring device (14, 15, 16) with which deformation of the connecting element (1) by the actuating force can be measured.

2. Connecting element according to Claim 1, **characterized in that** the connecting element (1) has at least one spring element (11) with a non-constant spring rate.

3. Connecting element according to Claim 1, **characterized in that** the deformation-measuring device (14, 15, 16) measures a change in distance between points on the connecting element (1) which are spaced apart from one another.

4. Connecting element according to Claim 3, **characterized in that** the deformation-measuring device (14, 15) measures a change in distance at or near to ends of the connecting element (1).

5. Connecting element according to Claim 3, **characterized in that** the connecting element (1) has spring elements (6, 11) which are connected in series and have various spring rates, and **in that** the deformation-measuring device (14, 16) measures a change in length of the spring element (6) with the relatively low spring rate.

## Revendications

1. Élément de liaison (1) pour mesurer une force d'actionnement d'un système de freinage de véhicule, ledit élément reliant un élément de commande (2) du système de freinage de véhicule à un élément d'entrée du système de freinage de véhicule, transmettant une force d'actionnement de l'élément de commande (2) à l'élément d'entrée, présentant une élasticité à ressort dont la courbe caractéristique de ressort est progressive, comportant des éléments de ressort (6, 11) branchés en série avec différentes vitesses de ressort agissant parallèlement après une course de ressort des éléments de ressort (6, 11) branchés en série, **caractérisé en ce qu'**il comporte un système de mesure de déformation (14, 15, 16) permettant de mesurer une déformation de l'élément de liaison (1) par le biais de la force d'actionnement.

2. Élément de liaison selon la revendication 1, **caractérisé en ce que** l'élément de liaison (1) comporte au moins un élément de ressort (11) dont les vitesses de ressort sont non constantes.

3. Élément de liaison selon la revendication 1, **caractérisé en ce que** le système de mesure de déformation (14, 15, 16) mesure une variation entre l'écartement de points de l'élément de liaison (1) espacés les uns par rapport aux autres.

4. Élément de liaison selon la revendication 3, **caractérisé en ce que** le système de mesure de déformation (14, 15) mesure une variation entre l'écartement observé au niveau des extrémités de l'élément de liaison (1) ou à proximité de celles-ci.

5. Élément de liaison selon la revendication 3, **caractérisé en ce que** l'élément de liaison (1) comporte des éléments de ressort (6, 11) branchés en série présentant des vitesses de ressort différentes et que le système de mesure de déformation (14, 16) mesure une variation de la longueur de l'élément de ressort (6) présentant la plus petite vitesse de ressort.
